# EUROPEAN PATENT SPECIFICATION

(11) **EP 2 004 028 B1**
(45) Date of publication and mention of the grant of the patent: **18.08.2010**
(21) Application number: 07735292.0
(22) Date of filing: 28.03.2007
(51) Int. Cl.: A47J 31/40

(54) **MACHINE FOR INSTANT PREPARATION OF BEVERAGES, IN PARTICULAR OF COFFEE, BY INFUSION OF A PRODUCT CONTAINED IN A POD**
MASCHINE ZUR SOFORTIGEN ZUBEREITUNG VON GETRÄNKEN, INSBESONDERE KAFFEE, DURCH AUFBRÜHEN EINES IN EINER KAPSEL ENTHALTENEN PRODUKTS
MACHINE POUR PREPARATION INSTANTANEE DE BOISSONS PAR INFUSION D'UN PRODUIT CONTENU DANS UN EMBALLAGE

(30) Priority: 28.03.2006 IT TO20060231
(43) Date of publication of application: 24.12.2008
(73) Proprietor: CME di Faccinti A., 10040 Leini' (Torino) (IT)
(72) Inventor: FACCINTI, Alfredo, I-10070 San Francesco Al Campo (Torino) (IT)
(74) Representative: Rondano, Davide
(86) International application number: PCT/IB2007/051091
(87) International publication number: WO 2007/110842

(56) References cited:
- EP-A1- 0 237 475
- EP-A1- 0 638 271

## Description

The present invention refers to a machine for instant preparation of beverages, in particular of coffee, by infusion of a product contained in a pod, as specified in the preamble of Claim 1.

The invention has been developed in particular with reference to the instant preparation of coffee by use of a pre-packaged pod constituted by a filter paper housing which contains a given amount of ground coffee. Although the following description will be given with reference to the preparation of coffee, it is however clear that the machine forming the subject-matter of the invention can also be used for instant preparation of other beverages by infusion of a product contained in a pod, such as for example tea or barley.

A machine for instant preparation of coffee from a thermoplastic capsule of substantially frustoconical shape containing a given amount of ground coffee is known from International Patent Application WO2006/003115. This known machine has been developed with the aim to make it possible to prepare both a so-called "American" coffee, that is, a long coffee, and of a so-called "espresso" coffee, that is, a restricted coffee, with no need to modify the type of pod used. To this end, the machine is provided with adjusting means for adjusting the degree of compaction of the ground coffee within the capsule. More particularly, the machine comprises a supply unit for supplying pressurised hot water, a cup-shaped body having a longitudinal axis which defines an end portion of the supply unit and has a cylindrical seat for receiving a flanged upper portion of the capsule, and a hydraulic cylinder having a substantially cylindrical outer liner coaxial with the aforesaid longitudinal axis and a piston mounted so as to be axially slidable along the liner. On the side facing the cup-shaped body, the liner comprises a head portion having a frustoconical inner surface. When the piston is in a retracted rest position, its flat head surface defines, along with the frustoconical inner surface of the head portion of the liner, a frustoconical seat coaxial with the aforesaid longitudinal axis and adapted to accommodate a capsule. In this condition, the machine is arranged to produce "American" coffee. When the user requires the delivery of "espresso" coffee, the piston is caused to move forwards from its retracted rest position towards the capsule housed in the frustoconical seat, whereby the inner volume of the capsule is reduced and the ground coffee contained therein is thus compacted.

Such a known machine is arranged to work only with thermoplastic capsules of predetermined shape and size, as the shape and size of the cylindrical seat of the cup-shaped body of the supply unit and of the frustoconical seat of the hydraulic cylinder with the associated piston are defined for a given type of capsule. Therefore, the machine typically cannot be used with capsules of different shape and size without requiring the replacement of the supply unit and of the hydraulic cylinder.

EP-A-237475 discloses a coffee brewing apparatus provided with a piston-cylinder assembly comprising a cylindrical cavity serving as a brewing chamber, a closing member mounted on the cylindrical cavity at one end thereof, and a piston which can be displaced into and retracted from the brewing chamber at the other end thereof under control of a stepping motor.

It is the object of the present invention to provide a machine for instant preparation of beverages from a soluble product contained in a pod, which makes it possible to use also, and principally, pods made of filter paper and which can be easily adapted, without requiring the replacement of any parts of the machine, to pods having a different volume or a different degree of compaction of the soluble product contained therein.

This object is fully achieved according to the present invention by a machine having the characteristics defined in the characterizing part of independent Claim 1.

By virtue of the pod being compacted in the extraction chamber substantially by drawing between a punch formed by the plunger of the supply head and a die formed by the cylindrical skirt portion of the pod-carrying body, the machine according to the invention is able to receive pods of different shape and size or pods not rightly positioned on the pod-carrying body.

Further advantageous characteristics of the invention are defined in the dependent claims.

In particular, by virtue of the machine according to the invention comprising first adjusting means for discretely adjusting the final volume of the pod-receiving chamber, or extraction chamber, on two or more values, as well as second adjusting means for continuously adjusting the minimum value of the final volume of the extraction chamber, it is possible, for instance during the setup of the machine, to adjust the final volume of the chamber on a given reference value depending on the type and size of the pod used in the machine. Once this first fine adjustment has been carried out, the machine is able to prepare beverages, in particular coffee, more or less "long" depending on the position of the first adjusting means. If it is necessary to change the type of pods used in the machine, the user simply needs to act only once on the first adjusting means to properly modify the reference volume of the extraction chamber depending on the volume of the new type of pod used.

Further characteristics and advantages of the invention will appear from the following detailed description, given purely by way of non-limiting example with reference to the appended drawings, in which:
Figure 1 is a perspective view of a machine for instant preparation of beverages according to a preferred embodiment of the invention, in a first operative position in which the user is allowed to insert a pod containing the soluble product corresponding to the desired beverage;
Figure 2 is a view similar to the one of Figure 1, in which the machine is in a second operative position in which the pod is compressed within the extraction chamber;
Figure 3 is a view similar to the one of Figure 1, in which the machine is in a third operative position in which the pod is expelled from the extraction chamber upon completion of the preparation of the beverage;
Figure 4 is a perspective view from behind and from below of the machine of Figures 1 to 3;

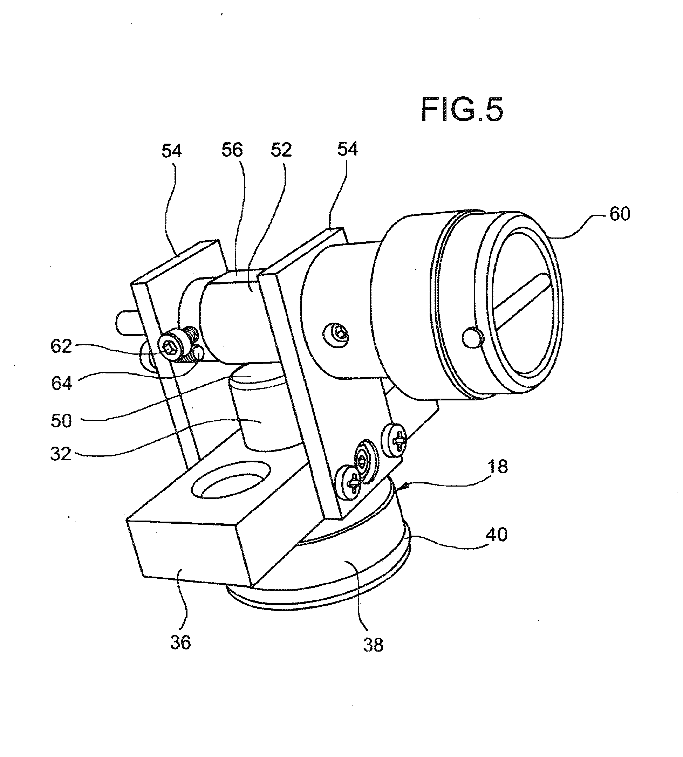

Figure 5 is an enlarged perspective view of the mechanism for adjusting the final volume of the extraction chamber; and
Figure 6 is an exploded perspective view of the mechanism of Figure 5.

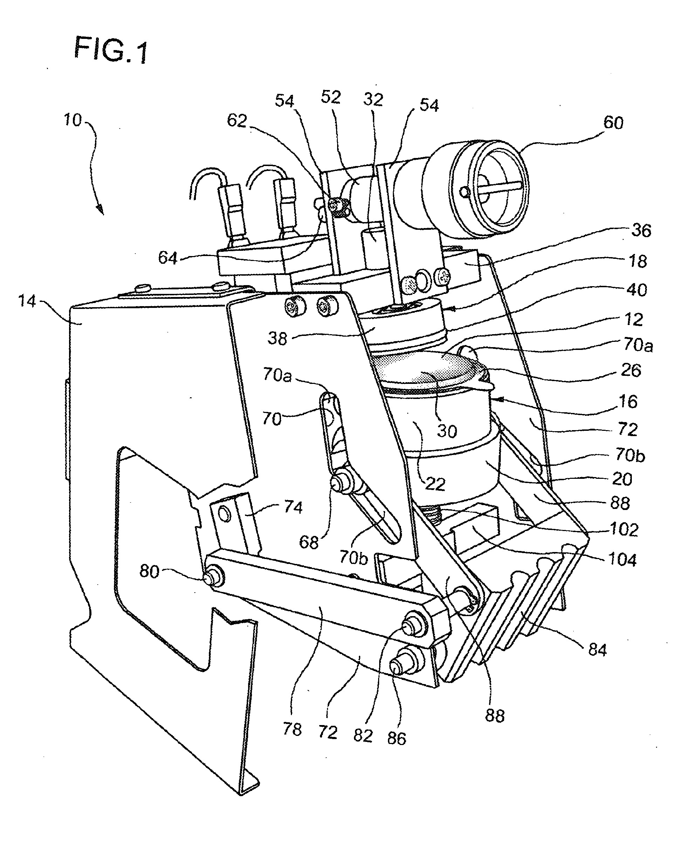

With reference first to Figures 1 to 4, a machine for instant preparation of beverages by percolation of pressurised hot water through a filter paper pod 12 of per-se-known type, containing a single-use portion of dosed and pressed soluble product, in particular a blend of roasted and ground coffee, is generally indicated 10.

The machine 10 comprises a frame structure 14, schematically illustrated in the figures, and an infusion device basically including a pod-carrying body 16 and a supply head 18.

The pod-carrying body 16 comprises a lower support portion 20 and an upper cylindrical skirt portion 22 enclosing an upwardly open cylindrical seat 24 adapted to receive the pod 12. More particularly, the cylindrical skirt portion 22 is preferably configured in such a manner that in the initial position in which the pod 12 is received in the pod-carrying body 16, the pod rests with an outer flange portion 26 thereof on a head surface 28 of the cylindrical skirt portion 22. Moreover, the inner diameter of the cylindrical seat 24 is preferably equal to or greater than the outer diameter of a biscuit-like portion 30 of the pod 12 containing the soluble product.

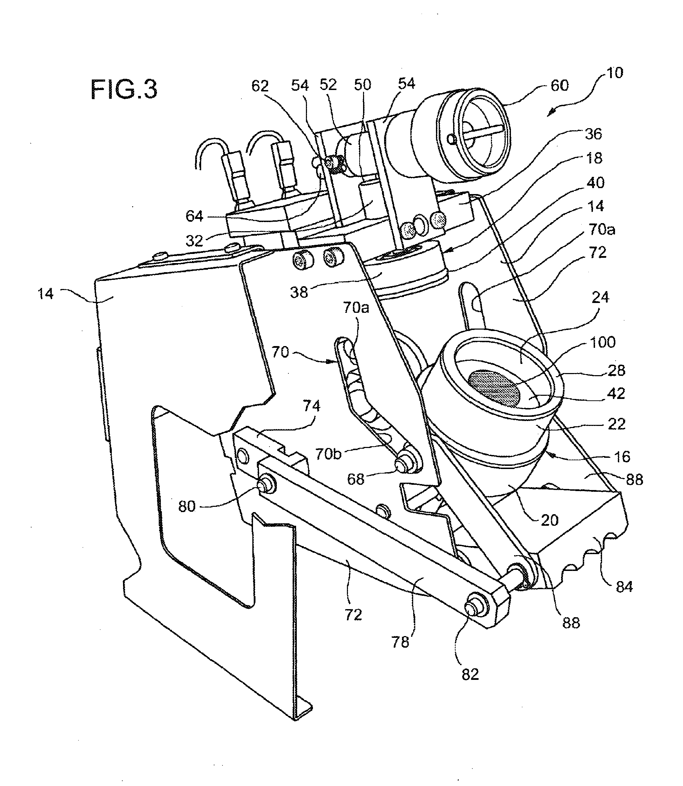

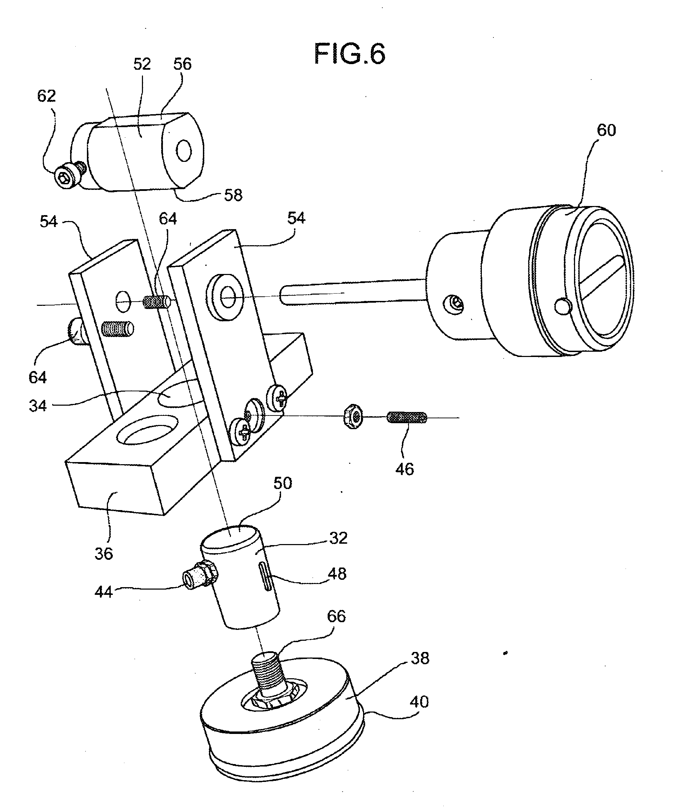

The supply head 18 comprises a rod 32, in the illustrated example a cylindrical rod, slidably mounted in a through hole 34 (which can be seen in Figure 6), the axis of which is orientated vertically or in a direction slightly inclined to the vertical, of a cross-member 36 attached to the frame structure 14, and a cylindrical plunger 38 connected to the bottom end of the rod 32. The plunger 38 is arranged to slide within the cylindrical seat 24 of the pod-carrying body 16 and is provided with a ring seal 40 so as to define, along with the inner side surface of the cylindrical skirt portion 22 and with a bottom wall 42 (which can be seen in Figure 3) of the latter, a sealed extraction chamber where the pod 12 is compacted by drawing between the plunger 38 acting as a punch and the cylindrical skirt portion 22 acting as a die and where percolation of pressurised hot water takes place.

In order to allow the supply of pressurised hot water into the extraction chamber, the rod 32 is provided with a pipe fitting 44 (which can be seen in Figure 6) for connection to the outlet of a heating device (not shown), such as a boiler or, preferably, a heat exchanger. Moreover, the plunger 38 is in fluid communication with the pipe fitting 44 in a known and not shown manner and has on its bottom head surface one or more holes (not shown) through which pressurised hot water is delivered.

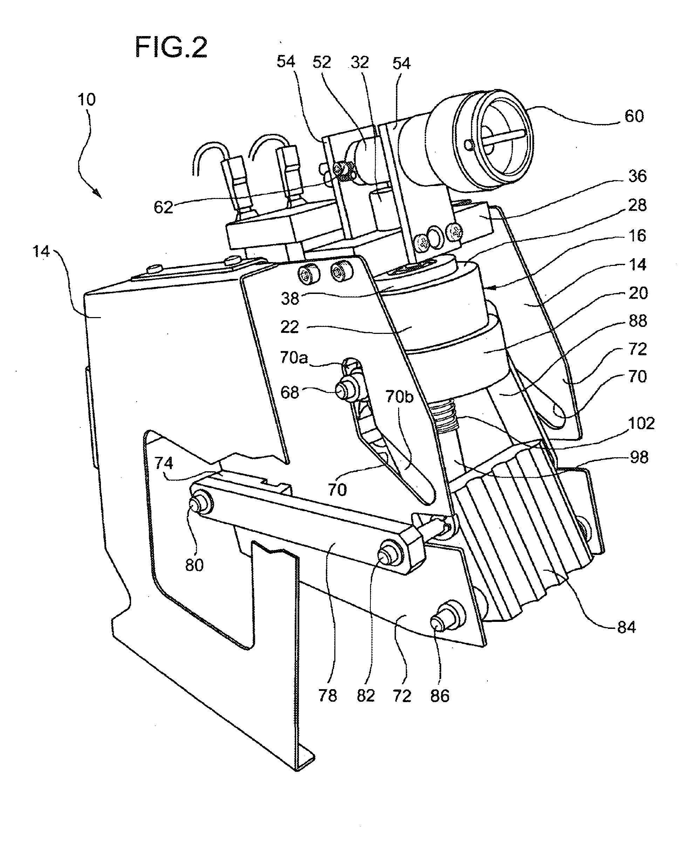

In rest conditions, as shown in Figures 1 and 3, the supply head 18 is held by gravity in a lower travel-limit position defined by a dowel 46 abutting against the upper end of a vertical slot 48 provided in the cylindrical side surface of the rod 32. During the phase of compaction of the pod 12, illustrated in Figure 2, the supply head 18 is urged upwards by the pod-carrying body 16 until it reaches an upper travel-limit position defined by an upper end surface 50 of the rod 32 abutting against the side surface of a shaft-like stop member 52. The stop member 52 is supported by a par of support walls 54 fixed to the cross-member 36 so that it can rotate about a horizontal axis of rotation, that is an axis which is perpendicular to the vertical axis along which the sliding movement of the rod 32 takes place. The stop member 52 has a cylindrical side surface on which a flat face 56 is provided and defines an abutment surface arranged at a distance from the axis of rotation of the stop member less than the remaining part of cylindrical side surface. Thus, when the flat face 56 of the stop member 52 faces the upper end surface 50 of the rod 32, a first upper travel-limit position for the supply unit 18 is set. On the other hand, when the cylindrical surface of the stop member 52 faces the upper end surface 50 of the rod 32, a second upper travel-limit position for the supply unit 18 is set, which is arranged at a lower height than the first position and hence corresponds to a higher degree of compaction of the pod 12 in the extraction chamber. The above-defined first and second travel-limit positions correspond therefore to the preparation of a "longer" and of a "more restricted" beverage, respectively.

However, further intermediate travel-limit positions can clearly be provided, each of which corresponds to a different degree of compaction of the pod and hence to a different degree of dilution of the beverage. For example, in the illustrated embodiment the side surface of the stop member 52 has a further flat face 58 arranged at a distance from the axis of rotation of the stop member 52 comprised between those of the other flat face 56 and of the cylindrical side surface. In this case, the user can therefore select three different levels of dilution of the beverage.

In order to select the desired travel-limit position, one simply needs to rotate the stop member 52 until the corresponding abutment surface is brought to face the upper end surface of the rod 32. This can be done either manually, for example by means of a control knob 60 attached to an end of the stop member 52, or automatically, for example by means of an electric motor (not shown) operable through a control button (also not shown). The angular positions of the stop member 52 which correspond to the various travel-limit positions of the supply unit 18 are defined by suitable stops, which for simplicity's sake are formed in the illustrated example by a screw or peg 62 carried by the stop member 52 and by a pair of screws or pegs 64 fixed to either of the support walls 54.

The stop member 52 with its properly shaped side surface constitutes therefore a first adjusting mechanism for discretely adjusting the travel-limit position of the supply unit 18, and hence the final volume of the extraction chamber, on at least two values.

Such an adjusting mechanism would suffice if only one type of pod was commercially available. Actually, different types of pods are present on the market and differ in the amount of soluble product contained therein. Therefore, the final volume of the extraction chamber being equal, the degree of compaction, and hence the degree of dilution of the beverage, varies depending on the volume of the pod.

In order to allow also an initial adjustment of the extraction chamber of the machine depending on the type of pod used, a second adjusting mechanism is provided according to the invention, by means of which a fine adjustment of the travel-limit position of the supply unit, and hence of the final volume of the extraction chamber, can be carried out. This second mechanism is preferably formed by a screw-type coupling between a threaded shank 66 (which can be seen in Figure 6), which is attached to the plunger 38 and projects upwards from this latter, and a corresponding threaded hole (not shown) provided at the bottom of the rod 32. Screwing more or less the plunger 38 on the rod 32 causes the distance between the plunger 38 and the pod-carrying body 16 in the lower travel-limit position of the supply head 18 to vary. It is thus possible accurately to adjust the minimum final volume (maximum degree of compaction) of the extraction chamber. Once this minimum volume is determined, the maximum volume and the intermediate volumes, if any, will be automatically determined based on the distance of the flat abutment faces 56, 58 of the stop member 52 from the axis of rotation of this latter.

When the plunger 38 is being screwed or unscrewed on the rod 32, the dowel 46 also acts as anti-rotation device for the rod 32. Alternatively, the rod 32 might have a non-circular cross-section, so as to be allowed only to slide but not to rotate about its own axis. According to another aspect of the invention, the machine 10 comprises a driving mechanism for imparting, during each work-cycle, a combined movement of translation and tilting about a horizontal axis to the pod-carrying body 16, as will be better explained hereinafter.

With reference to Figures 1 to 3, the pod-carrying body 16 is provided with a pair of guide pins 68 projecting horizontally on diametrically opposite sides from the lower support portion 20. Each guide pin 68 slidably engages in a respective guide slot 70 provided in a respective side vertical wall 72 of the frame structure 14. The pod-carrying body 16 can therefore translate along the path defined by the guide slots 70 and tilt about a horizontal tilting axis defined by the guide pins 68. Each guide slot 70 has an upper straight branch 70a substantially parallel to the sliding direction of the supply head 18, and a lower straight branch 70b forwardly inclined with respect to the upper branch 70a.

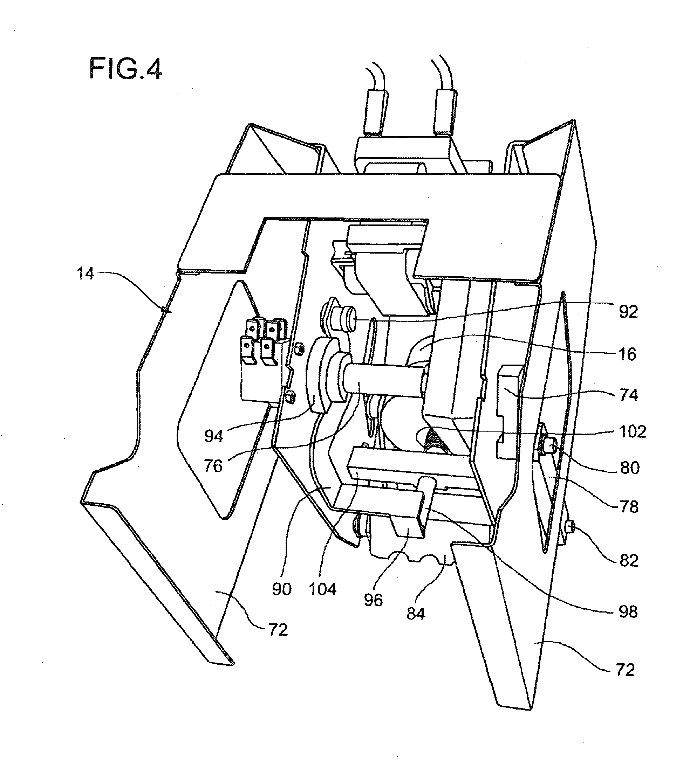

The mechanism for driving the pod-carrying body 16 includes a pair of toggle linkages, each associated to a respective guide pin 68 of the pod-carrying body 16. Each linkage basically comprises a crank 74 drivingly connected for rotation with a respective end of a drive shaft 76 (which can be seen in Figure 4), a first connecting rod 78 articulated at an end thereof to the crank 74 by means of a first articulation pin 80 and at the opposite end to a second articulation pin 82 mounted at an upper end of a lever 84, the lever being shared by the two linkages and articulated at the lower end to both the side vertical walls 72 by means of a third articulation pin 86, and a second connecting rod 88 articulated at a first end thereof to the second articulation pin 82 and at the opposite end to the respective guide pin 68. Alternatively, the single lever 84 can obviously be replaced by a pair of levers each associated to a respective toggle linkage. The drive shaft 76 which drives the two toggle linkages can be operated by the user either manually by means of a control lever (not shown) or automatically by an electric motor (also not shown) operable by means of a control button.

The mechanism for driving the pod-carrying body 16 further includes a pivoting lever 90 (which can be seen in Figure 4) articulated at an end thereof to a pin 92 fixed to either of the vertical side walls 72, and a cam 94 which is carried by the drive shaft 76 so as to be drivingly connected for rotation therewith and has a suitably shaped outline co-operating with an intermediate portion of the pivoting lever 90. At the free end of the pivoting lever 90 an abutment portion 96 is provided against which rests the lower end of a bar 98 extending coaxially through the pod-carrying body 16 and carrying at its upper end an expulsion plate 100 (which can be seen in Figure 3). The bar 98 is held in a lowered rest position, in which the expulsion plate 100 is substantially flash with or just slightly projecting from the bottom wall 42 of the cylindrical skirt portion 22 of the pod-carrying body 16, by a helical spring 102 interposed between the bottom of the pod-carrying body 16 and an abutment element 104 attached to the bar 98.

The toggle linkages drive the translation movement of the pod-carrying body 16 along the path defined by the guide slots 70 between an initial loading position (Figure 1), in which the pod-carrying body 16 is spaced from the supply head 18 and can then receive a pod 12, a compaction travel-limit position (Figure 2), in which the supply head 18 is urged by the pod-carrying body 16 to the upper travel-limit position defined by the rod 32 abutting against the stop member 52, whereby an extraction chamber of predetermined volume is defined between the plunger 38 of the supply head 18 and the cylindrical seat 24 of the pod-carrying body 16, and an expulsion position (Figure 3), in which the pod-carrying body 16 is at the maximum distance from the supply head 18 and is inclined forwards so as to allow the pod 12 used for the preparation of the beverage to be expelled from the pod-carrying body 16 as a result of the expulsion plate 100 being raised.

The pivoting lever 90 is actuated by the cam 94 in synchronism with the translation movement of the pod-carrying body 16 to cause the pod-carrying body 16 to tilt forwards and the bar 98 and plate 100 to be raised in the final step of the downward movement of the pod-carrying body 16 from the position of Figure 2 to the position of Figure 3.

As will be clear from the description given above, by virtue of the machine being provided with a double mechanism for adjusting the final volume of the extraction chamber, that is to say, with a first discrete adjusting mechanism by means of which the final user of the machine can every time select one of at least two predetermined levels of compaction of the pod, or of dilution of the beverage, and a second continuous adjusting mechanism by means of which the setup man or the supplier of the machine can finely adjust the maximum degree of compaction, i.e. the minimum final volume of the extraction chamber, depending on the type of pod being used, the machine can be used with any type of pod, without requiring any parts of the machine to be replaced. The machine is thus extremely flexible, since it suffices to vary the volume of the extraction chamber depending on the type of coffee used and on the type of beverage desired.

Moreover, by virtue of the compaction of the pod in the extraction chamber occurring substantially by drawing between a punch formed by the plunger of the supply head and a die formed by the cylindrical skirt portion of the pod-carrying body, the infusion device of the machine is able to receive pods of different shape and size or pod not rightly positioned on the pod-carrying body. The machine is even able to work with ground coffee, not packaged in a pod.

Naturally, the principle of the invention remaining unchanged, the embodiments and constructional details may vary widely with respect to those described and illustrated purely by way of a non-limiting example.

## Claims

1. Machine (10) for instant preparation of beverages, in particular of coffee, by infusion of a product contained in a pod (12), the machine comprising
a pod-carrying body (16) having a seat (24) adapted to receive the pod (12), and
a supply head (18) movable relative to the pod-carrying body (16) between a loading position, in which the pod-carrying body (16) and the supply head (18) are spaced from one another to allow the pod (12) to be loaded in the seat (24), and a compaction position, in which the pod-carrying body (16) and the supply head (18) seal an extraction chamber where the pod (12) is compacted to a given final volume,
wherein the supply head (18) includes a plunger (38) arranged to slide within the seat (24) along a direction of compaction so as to compact by drawing the pod (12) received in the seat (24),
**characterized in that** it further comprises first adjusting means (52, 60) for discretely adjusting the final volume of the extraction chamber between a minimum value and a maximum value, and second adjusting means (66) for continuously adjusting the minimum value of the final volume of the extraction chamber.

2. Machine according to Claim 1, wherein the plunger (38) is able to translate along the direction of compaction between a first travel-limit position corresponding to the compaction position and a second travel-limit position corresponding to the loading position, and wherein said first adjusting means (52, 60) are arranged to vary said first travel-limit position and wherein said second adjusting means (66) are arranged to vary the distance between the plunger (38) and the pod-carrying body (16) when the plunger (38) is in said second travel-limit position.

3. Machine according to Claim 1 or Claim 2, wherein said second adjusting means (66) are screw-type adjusting means.

4. Machine according to any of Claims 1 to 3, wherein said first adjusting means (52, 60) comprise a stop member (52) defining said first travel-limit position.

5. Machine according to Claim 4, wherein the supply head (18) comprises a rod (32) which is slidable along the direction of compaction and wherein the plunger (38) is fixed to an end of the rod (32), and wherein the stop member (52) is a shaft which is rotatably mounted about an axis of rotation substantially perpendicular to the direction of compaction and has a side surface suitably shaped so as to have at least two surfaces (56, 58) for abutment of the rod (32) which are disposed at different distances from the axis of rotation.

6. Machine according to Claim 5, wherein at least one of said two abutment surfaces (56, 58) of the stop member (52) is a flat surface.

7. Machine according to Claim 5 or Claim 6, wherein said first adjusting means (52, 60) further comprise an actuation member (60) arranged to cause the stop member (52) to rotate about the axis of rotation thereof so as to bring every time one of the abutment surfaces (56, 58) thereof in a position facing the rod (32).

8. Machine according to Claim 1, wherein the supply head (18) comprises a rod (32) which is slidable along the direction of compaction and wherein the plunger (38) is fixed to an end of the rod (32), and wherein said second adjusting means (66) are arranged to vary the position of the plunger (38) relative to the rod (32) along the direction of compaction.

9. Machine according to Claim 8, wherein said second adjusting means (66) comprise a threaded shank (66) fixed to the plunger (38) and a corresponding threaded hole provided in the rod (32).

10. Machine according to any of the preceding claims, further comprising means for producing pressurised hot water and for supplying it to the extraction chamber through the supply head (18) when this latter is in the position of compaction.

## Patentansprüche

1. Gerät (10) für das sofortige Zubereiten von Getränken, insbesondere von Kaffee, durch Aufgießen eines Produkts, das in einer Hülle (12) enthalten ist, wobei das Gerät Folgendes umfasst:
einen die Hülle tragenden Körper (16) mit einer Aufnahme (24), die dafür eingerichtet ist, die Hülle (12) aufzunehmen, und
einen Zuführkopf (18), der relativ zum die Hülle tragenden Körper (16) zwischen einer Einlegeposition, in welcher der die Hülle tragende Körper (16) und der Zuführkopf (18) einen Abstand zueinander aufweisen, damit die Hülle (12) in die Aufnahme (24) eingelegt werden kann, und einer Komprimierungsposition bewegbar ist, in welcher der die Hülle tragende Körper (16) und der Zuführkopf (18) eine Extraktionskammer verschließen, in der die Hülle (12) auf ein bestimmtes Endvolumen komprimiert wird,
wobei der Zuführkopf (18) einen Kolben (38) aufweist, der so angeordnet ist, dass er innerhalb der Aufnahme (24) in einer Komprimierungsrichtung verschiebbar ist, um die Hülle (12), die in der Aufnahme (24) aufgenommen ist, durch Ziehen zu komprimieren,
**dadurch gekennzeichnet, dass** es weiterhin erste Einstellmittel (52, 60) zum schrittweisen Einstellen des Endvolumens der Extraktionskammer zwischen einem Minimalwert und einem Maximalwert, sowie zweite Einstellmittel (66) zum kontinuierlichen Einstellen des Minimalwerts des Endvolumens der Extraktionskammer aufweist.

2. Gerät nach Anspruch 1, wobei sich der Kolben (38) in der Komprimierungsrichtung zwischen einer ersten Wegbegrenzungsposition, die der Komprimierungsposition entspricht, und einer zweiten Wegbegrenzungsposition, die der Einlegeposition entspricht, geradlinig bewegen kann, und wobei die ersten Einstellmittel (52, 60) so angeordnet sind, dass sie die erste Wegbegrenzungsposition verändern, und wobei die zweiten Einstellmittel (66) so angeordnet sind, dass sie den Abstand zwischen dem Kolben (38) und dem die Hülle tragenden Körper (16) verändern, wenn sich der Kolben (38) in der zweiten Wegbegrenzungsposition befindet.

3. Gerät nach Anspruch 1 oder Anspruch 2, wobei die zweiten Einstellmittel (66) Schrauben-Einstellmittel sind.

4. Gerät nach einem der Ansprüche 1 bis 3, wobei die ersten Einstellmittel (52, 60) ein Anschlagelement (52) umfassen, das die erste Wegbegrenzungsposition definiert.

5. Gerät nach Anspruch 4, wobei der Zuführkopf (18) eine Stange (32) aufweist, die entlang der Komprimierungsrichtung verschiebbar ist, und wobei der Kolben (38) an einem Ende der Stange (32) befestigt ist, und wobei das Anschlagelement (52) eine Welle ist, die drehbar um eine Rotationsachse gelagert ist, die im Wesentlichen senkrecht zur Komprimierungsrichtung verläuft, und eine Seitenfläche aufweist, die geeignet geformt ist, damit sie mindestens zwei Flächen (56, 58) als Anschlag für die Stange (32) aufweist, die in unterschiedlichem Abstand zur Rotationsachse angeordnet sind.

6. Gerät nach Anspruch 5, wobei mindestens eine der beiden Anschlagflächen (56, 58) des Anschlagelements (52) eine ebene Fläche ist.

7. Gerät nach Anspruch 5 oder Anspruch 6, wobei die ersten Einstellmittel (52, 60) weiterhin ein Betätigungselement (60) aufweisen, das so angeordnet ist, dass es eine Drehung des Anschlagelements (52) um seine Rotationsachse bewirkt, um jedes Mal eine seiner Anschlagflächen (56, 58) in eine Position zu bringen, in der sie der Stange (32) gegenüberliegt.

8. Gerät nach Anspruch 1, wobei der Zuführkopf (18) eine Stange (32) aufweist, die in der Komprimierungsrichtung verschiebbar ist, und wobei der Kolben (38) an einem Ende der Stange (32) fixiert ist, und wobei die zweiten Einstellmittel (66) so angeordnet sind, dass sie die Position des Kolbens (38) relativ zur Stange (32) entlang der Komprimierungsrichtung verändern.

9. Gerät nach Anspruch 8, wobei die zweiten Einstellmittel (66) einen Gewindeschaft (66), der an dem Kolben (38) fixiert ist, und eine entsprechende Gewindebohrung aufweisen, die in der Stange (32) vorgesehen ist.

10. Gerät nach einem der vorhergehenden Ansprüche, das weiterhin Mittel zum Herstellen von heißem, unter Druck stehendem Wasser und zum Zuführen desselben zur Extraktionskammer durch den Zuführkopf (18) hindurch aufweist, wenn sich letzterer in der Komprimierungsposition befindet.

## Revendications

1. Machine (10) pour la préparation instantanée de boissons, en particulier de café, par infusion d'un produit contenu dans une dosette (12), la machine comprenant :
un corps (16) porte-dosette ayant un siège (24) adapté pour recevoir la dosette (12), et
une tête d'alimentation (18) mobile par rapport au corps (16) porte-dosette entre une position de chargement, dans laquelle le corps (16) porte-dosette et la tête d'alimentation (18) sont écartés l'un de l'autre pour permettre à la dosette (12) d'être chargée dans le siège (24), et une position de compactage, dans laquelle le corps (16) porte-dosette et la tête d'alimentation (18) scellent une chambre d'extraction où la dosette (12) est compactée jusqu'à un volume final donné,
où la tête d'alimentation (18) comporte un plongeur (38) agencé pour glisser à l'intérieur du siège (24) le long d'une direction de compactage de manière à réaliser le compactage en tirant la dosette (12) reçue dans le siège (24),
**caractérisée en ce qu'**elle comprend en outre un premier moyen de réglage (52, 60) pour régler discrètement le volume final de la chambre d'extraction entre une valeur minimale et une valeur maximale, et un deuxième moyen de réglage (66) pour régler en continu la valeur minimale du volume final de la chambre d'extraction.

2. Machine selon la revendication (1), dans laquelle le plongeur (38) peut translater le long de la direction de compactage entre une première position limite de déplacement correspondant à la position de compactage et une deuxième position limite de déplacement correspondant à la position de chargement, et où ledit premier moyen de réglage (52, 60) est agencé pour faire varier ladite première position de limite de déplacement et où ledit deuxième moyen de réglage (66) est agencé pour faire varier la distance entre le plongeur (38) et le corps (16) porte-dosette lorsque le plongeur (38) se trouve dans ladite deuxième position limite de déplacement.

3. Machine selon la revendication 1 ou 2, dans laquelle ledit deuxième moyen de réglage (66) est un moyen de réglage de type à vis.

4. Machine selon l'une des revendications 1 à 3, dans laquelle ledit premier moyen de réglage (52, 60) comprend une butée (52) définissant ladite première position limite de déplacement.

5. Machine selon la revendication 4, dans laquelle la tête d'alimentation (18) comprend une tige (32) qui peut glisser le long de la direction de compactage et où le plongeur (38) est fixé à une extrémité de la tige (32), et où la butée (52) est un arbre qui est monté en rotation autour d'un axe de rotation sensiblement perpendiculaire à la direction de compactage et a une surface latérale convenablement conformée pour avoir au moins deux surfaces (56, 58) pour la butée de la tige (32) qui sont disposées à différentes distances de l'axe de rotation.

6. Machine selon la revendication 5, dans laquelle au moins l'une desdites deux surfaces de butée (56, 58) de la butée (52) est une surface plate.

7. Machine selon la revendication 5 ou 6, dans laquelle ledit premier moyen de réglage (52, 60) comprend en outre un élément d'actionnement (60) agencé pour amener la butée (52) à tourner autour de son axe de rotation de sorte à amener à chaque fois l'une de ses surfaces de butée (56, 58) dans une position en vis-à-vis de la tige (32).

8. Machine selon la revendication 1, dans laquelle la tête d'alimentation (18) comprend une tige (32) qui peut glisser le long de la direction de compactage et où le plongeur (38) est fixé à une extrémité de la tige (32), et où ledit deuxième moyen de réglage (66) est agencé pour faire varier la position du plongeur (38) par rapport à la tige (32) le long de la direction de compactage.

9. Machine selon la revendication 8, dans laquelle ledit deuxième moyen de réglage (66) comprend une tige filetée (66) fixée au plongeur (38) et un orifice taraudé correspondant pourvu dans la tige (32).

10. Machine selon l'une des revendications précédentes, comprenant en outre un moyen pour produire de l'eau chaude sous pression et pour l'alimenter à la chambre d'extraction à travers la tête d'alimentation (18) lorsque cette dernière se trouve dans la position de compactage.
